# EUROPEAN PATENT APPLICATION

(11) **EP 2 645 191 A1**
(43) Date of publication of application: **02.10.2013**
(21) Application number: 12161697.3
(22) Date of filing: 28.03.2012
(51) Int. Cl.: G05B 19/418

(54) **A method for visualizing material flow of raw or semi-processed material in a process control system**

(71) Applicant: ABB Research Ltd., 8050 Zürich (CH)
(72) Inventor: Mikkelsen, Christine, 725 91 Västerås (SE); Jakobsson, David, SE-931 46 Skellefteå (SE); Dong, Diamond, 722 10 Västerås (SE); Lundeholm, Filip, 415 01 Göteborg (SE)
(74) Representative: Savela, Reino Aleksi

(57) **Abstract**

A method for visualizing process flow in a production process (32) is disclosed, the method being applicable to at least one of: scheduling a planned production sequence using an activity planning system, or recording a material flow in an existing production sequence in a processing installation, in which a raw or semi-processed material is handled using a process control system (20). The material flow is moved from a first stage (Al-A12) to a second or other stage (S1-S9; C1,C2; H1 using one or more of a plurality of routes in the installation. Information is retrieved about a production sequence in the installation from the activity planning system or the process control system. One or more material flows are calculated as a result of the planned or actual production sequence(s) and a schematic visualization of the flow of material in a given time period is displayed on a workstation. A workstation and a computer program product are also described.

## Description

### TECHNICAL FIELD

The present invention is concerned with visualising process control data in a process control system. More particularly the present invention relates to a method and computer program product for providing an improved graphical user interface for an interface operator in a process control system as well as to an operator workstation connected to the process control system.

### TECHNICAL BACKGROUND

Computer based process control systems are widely used in a number of different industrial environments. Process control systems are used in parts of a process installation such as a mine, or quarry, or cement plant in which processing of a solid raw or semi-processed material such as an ore of iron, aluminum, copper, zinc and the like; or for a non-metallic minerals such as coal, clay, grain and so on. In such process installations substances are typically handled in large volumes and processed or treated in a continuous or semi-continuous process. Typically these processes may include an activity such as: collecting raw material by excavation, cutting, blasting or drilling and transporting it to a subsequent stage; mechanically processing material by crushing or grinding, screening or size grading; and/or processing a material to change concentration by agglomeration, blending, pelletisation or other concentration processes.

Process control systems in such processing installations gather and contain information about plant equipment, measurement data of one or more physical properties, process data, current and historic values for the measurement data and the process data, measured variables, trends, and so on which information is used to carry out supervision and control of control of processes, the production facilities and the industrial plant. The process control information of a process control system is typically presented to the operators by a display screen showing a number of different process graphics that each presents process data (measurements, values), tag identifiers or an equipment ID, alarm status, connections between plant equipment, etc for a given process or process section.

In industries such as mining, mineral extraction and processing control systems tend to only be installed for supervising and/or controlling selected equipment and processes, or systems which are relatively isolated and separate from other parts of the overall extraction process. In contrast to this, in a factory or in a process in another industry such as in an oil refinery, a paper mill or a steel rolling mill, the location of machinery and equipment is fixed. Thus the position of different process sections is fixed, piping and other connections in the process are fixed, and the provision of process control systems that supervise and control a complete installation with one control system monitoring and controlling a process from beginning to end is well established. Operator displays on workstations or computer terminals in the form of process graphics or other graphical interfaces typically provide displays which cover the whole installation, including each process section in the plant. WO 2010/124335A1, Integrated Automation System, assigned to University of Sydney, describes a Mine Automation System (MAS) which is used to manage autonomous operations, ie mining operations, within a defined geographical region. W02011/041848, entitled A Mine Operation Monitoring System, and assigned to Technological Resources Pty. Ltd., describes a method of collecting data for a map of a mine. The position of vehicles is tracked and displayed on a map together with positions of mine equipment.

A challenge for process control systems in a processing installation for a solid raw or semi-processed material is that it is difficult to create process displays for processes in which the arrangement of process equipment and sections is not static. In a quarry, open pit mine or strip mine new roads, ramps or tunnels may be built, and others may be altered, discontinued with or destroyed. Frequently there is more than one route that may be taken in an above-ground processing installation in order to transfer material from one point, eg a storage area, to another, eg a conveyor or a crushing machine. Similarly in underground mines a mining process is typically dynamic since the mined material from one extraction or production point often does not have a single predefined route between, for example, a first cutting face and an interim storage or other parts of the mine. There may be alternative storages and there are most often alternative ways to transport the mined material to another underground level or up to the surface. Many mines have, for example, two or more hoists, serving one or more underground excavation areas, cutting faces or galleries, some of which may be located at different depths in a mine.

However, trying to create a process view that displays all possible material flows, and/or transportation alternatives, for such a non-static process would result in a cluttered view. It would be difficult to map ongoing activities on a process view display with sufficient information to provide the operator with an effective situation awareness without causing a cluttered or overloaded information display. It is important to avoid undue clutter on a process display or process graphic used in process control. Process graphics are the mainstay of many process control systems. All of the control objects, represented by software objects, are placed in a context of one or more process graphics. The work of an operator supervising a process includes the important functions of supervising the various parts of a process, and taking control actions when necessary. The main functions used by the operators are typically alarm management, trends, process graphics and faceplates. The majority of these functions are implemented by manipulating control objects in the process graphics. An important functionality in the control system is navigation and another important aspect of that is visualization of system status and to highlight data that has provoked an abnormal condition. However in some situations the operator often has limited time available to make a decision. For a least this reason, it is important to avoid cluttered process displays in order that an operator is provided with information relative to a monitoring and control task. It is also important to avoid clutter so as to reduce operator workload and fatigue.

The inventors have identified that there is a need for a way to visualize process flow in a production process in which a raw or semi-processed material is handled and display such a visualization on an operator workstation, included for example in a process graphic, to show the flow of material in a process in an uncluttered way.

### SUMMARY OF THE INVENTION

According to a first aspect of the present invention an improvement is provided in the form of a method for visualizing a process flow in a production process in which a raw or semi-processed material is handled, the method including at least one of scheduling a planned production sequence using an activity planning system, or recording a material flow in an existing production sequence in a processing installation using a process control system, wherein the material flow is moved from a first stage to a second or subsequent stage using one or more of a plurality of routes, the method further comprising retrieving information about a production sequence in the installation from the activity planning system or the process control system, calculating one or more said material flows as a result of the planned or actual production sequence and displaying in a first display window on a display of a workstation a schematic visualization of the flow of material in a given time period from at least one first process stage to at least one second or subsequent process stage in the installation as a result of the planned or actual production sequence.

A primary object of the present invention is to provide a visualization of a process that includes a plurality of process stages and/or process sections. The visualization described here provides a clear and un-cluttered overview. For example a truck or loader vehicle which is scheduled to transport raw material such as ore from production point to an interim storage it would be displayed as a connected line between the two objects on the process display. An operator may monitor a plurality of process sections with one visualization and see only one material flow for each raw or semi-processed material that has been moved, handled or processed or transported between two or more process stages in a specified time interval. By maintaining an overview over a plurality of process stages or process sections it makes it easier for the operator to have and maintain a sense of overall context in the process.

According to an embodiment of the invention a method is provided for visualizing a process flow in a production process in which a raw or semi-processed material is handled, the method including at least one of scheduling a planned production sequence using an activity planning system, or recording a material flow in an existing production sequence in a processing installation using a process control system, wherein the material flow is moved from a first stage to a second or subsequent stage, further comprising the step of displaying a route taken by the material flow between the first process stage and the at least one second process stage which route is visually indicated in a visualization included in a process graphic or process flow diagram.

According to another embodiment of the invention a method is provided for visualizing a process flow in a production process in which a raw or semi-processed material is handled, the method including at least one of scheduling a planned production sequence using an activity planning system, or recording a material flow in an existing production sequence in a processing installation using a process control system, wherein the material flow is moved from a first stage to a second or subsequent stage, further comprising the step of displaying the route taken by the material flow visually indicated by means of a line joining the first stage to the at least one second process stage. Another object of the present invention is to provide a visualization in which screen clutter is minimized in order to avoid operator fatigue. By only displaying a line between two process stages when a planned or actual material flow is recorded the operator may direct his or her attention to one material flow for a given time period without being distracted by a plurality of many material flows resulting in a cluttered screen display.

According to another, further embodiment of the invention a method is provided for visualizing a process flow in a production process in which a raw or semi-processed material is handled, the method including at least one of scheduling a planned production sequence using an activity planning system, or recording a material flow in an existing production sequence in a processing installation using a process control system, wherein the material flow is moved from a first stage to a second or subsequent stage, further comprising the step of displaying the line visually indicating the material flow where the line has a predetermined thickness and the thickness of the line is calculated and displayed in proportion to a material parameter of the material flow between any process stages equal to any property from the group of: quantity of material, weight, volume, density, size distribution.

It is an advantage to display with an image or picture a proportionality that the operator may interpret with a single glance. The most common parameter in some installations may be that line thickness is proportional to weight or volume of raw material between one stage and another, subsequent stage. By focusing on a line between two stages the operator can see how much material is/was in the material flow from the first stage to a subsequent stage.

According to another embodiment of the invention a method is provided for visualizing a process flow in a production process in which a raw or semi-processed material is handled, the method including at least one of scheduling a planned production sequence using an activity planning system, or recording a material flow in an existing production sequence in a processing installation using a process control system, wherein the material flow is moved from a first stage to a second or subsequent stage, further comprising the step of displaying the line visually indicating the material flow with a predetermined visual indication according to which type of raw or semi-processed material the material flow contains, the type of material being any from the group of: mineral, a first metal ore, a second metal ore, high grade ore, low grade ore, stone, sand, cement, lime, shale, clinkers, mining waste, slag.

For an installation that handles more than one type of raw or semi-processed material, operator effort required to maintain an overview of production including two or more materials is greatly reduced. The precise location of a material flow of each material type is similarly signaled to the operator by means of a line visualized with a different visual indicator for each material type.

According to another, further embodiment of the invention a method is provided for visualizing a process flow in a production process in which a raw or semi-processed material is handled, the method including at least one of scheduling a planned production sequence using an activity planning system, or recording a material flow in an existing production sequence in a processing installation using a process control system, wherein the material flow is moved from a first stage to a second or subsequent stage, further comprising the step of applying a filter to the information of the planned production sequence or to measurement data of one or more physical properties of the actual production sequence material flows and displaying at least one material flow for which the line is drawn with a visual indicator indentifying the material flow of a selected type of raw or semi-processed material. By means of using the present embodiment an operator may configure the system to display only a selected type of raw material of interest, which filter function may be switched on or off with a toggle command or by selecting a tab for example so that materials flows for one product type can be quickly and easily retrieved, displayed and supervised.

According to another embodiment of the invention a method is provided for visualizing a process flow in a production process in which a raw or semi-processed material is handled, the method including at least one of scheduling a planned production sequence using an activity planning system, or recording a material flow in an existing production sequence in a processing installation using a process control system, wherein the material flow is moved from a first stage to a second or subsequent stage, further comprising the step of opening a second display window on the workstation as a transparent or semi-transparent window and displaying one or more optimal material flows between the first process stage and a second or subsequent stage in the installation as a visualisation on the workstation, wherein the second display window is superimposed over, or under, the first window such that both the visualization of the planned or actual material flows and the optimal material flows are visible at the same time.

Similar to the previous embodiment, an operator may configure the system to display optimal routes for material flows in each production area and then compare these optimal routes with actual or planned material flows. Once again this view may be switched on or off with a toggle command or by selecting a tab for example so a material flow can be compared with an optimal route quickly and easily.

According to another embodiment of the invention a method is provided for visualizing a process flow in a production process in which a raw or semi-processed material is handled, the method including at least one of scheduling a planned production sequence using an activity planning system, or recording a material flow in an existing production sequence in a processing installation using a process control system, wherein the material flow is moved from a first stage to a second or subsequent stage, further comprising the step of displaying the schematic visualization of a plurality of the one or more material flows calculated for the planned production sequence or recorded for the actual production sequence, over a time period, wherein the time period may be varied according to user input, and displaying the route taken by the material in the material flow during the user selected time period.

The operator may select a time period of interest in order to supervise a planned or actual material flow. The visualization may display a material flow, for example, backwards in time, thus retrieving information about the origin and previous handling of material flow that represents a batch of raw material. The operator can review or examine this information with a minimum of effort, and find out the previous origin and processing of a present batch.

According to a second aspect of the invention, a workstation for a process control system is provided in an installation in which a raw or semi-processed material is handled, the process control system including at least one computer with computer programs adapted for carrying out at least one of scheduling a planned production sequence using an activity planning system, or for recording material flow in an existing production sequence using the process control system, wherein the material flow is moved from a first stage to a second or subsequent stage using one or more of a plurality of routes, the workstation further comprising an interface for receiving measurement data of one or more physical properties relating to a process being controlled by the process control system, a display unit for displaying physical properties of the process control system to a system operator, and a display control unit configured to: retrieve information about a production sequence in the installation from the activity planning system or the process control system, calculate one or more said material flows as a result of the planned or actual production sequence and display in a first display window on a display of the workstation a schematic visualization of the flow of material in a given time period from a first process stage to at least one second or subsequent process stage in the installation as a result of the planned or actual production sequence.

An advantage of the workstation described is that if the information is taken from the scheduled activities, then the displays would show the currently scheduled flow of material for a planned production sequence. It would take all the transportation activities that are planned at a specific time and map the planned transportation of ore or other mineral to the process flow display. By this means an operator monitoring a process, or a process engineer setting up or trouble shooting a process, can identify possible bottle necks, pinch-points in the scheduled process or processes, and be ready to eg request additional vehicles or take alternative action if necessary, or else revise the schedule. In addition, if the information is taken from the material tracking system instead, the display would show the actual flow of material for a current production sequence during a defined time interval. That means that it would display the actual recorded material flow, including transportation, during a time interval regardless of the planned schedule. In a development of the invention is also possible to use a time slider to vary the selected time period and by this means to go back or forward to display historical or future planned flow or, a present of historical actual material flow. It should be noted that only the planned or actual material flow between two or more process stages for a given time period are displayed. Thus the operator may direct his or her attention to one material flow at a time without being distracted by a several material flows resulting in a cluttered screen display.

In a preferred embodiment the methods of the invention may be carried out by a computing device comprising one or more microprocessor units or computers. The computing device is arranged with access to data storage or memory means for storing one or more computer programs for carrying out the improved methods for visualisation of material flow in a process control system. Preferably such computer programs contain instructions for the processor to perform the method as mentioned above and described in more detail below. The instructions may be stored on a non-transitory computer readable medium. The instructions may also be stored in volatile computer-readable memory.

### BRIEF DESCRIPTION OF THE DRAWINGS

Embodiments of the invention will now be described, by way of example only, with particular reference to the accompanying drawings in which:
FIGURE 1 shows a schematic representations of a visualization of material flow in a process for display in a human machine interface on workstation for monitoring and controlling a process, the example showing schematically a layout of production equipment in a process graphic in the control system, and showing a material flow between one or more process stages;
FIGURE 2 is a schematic representation of the visualisation of

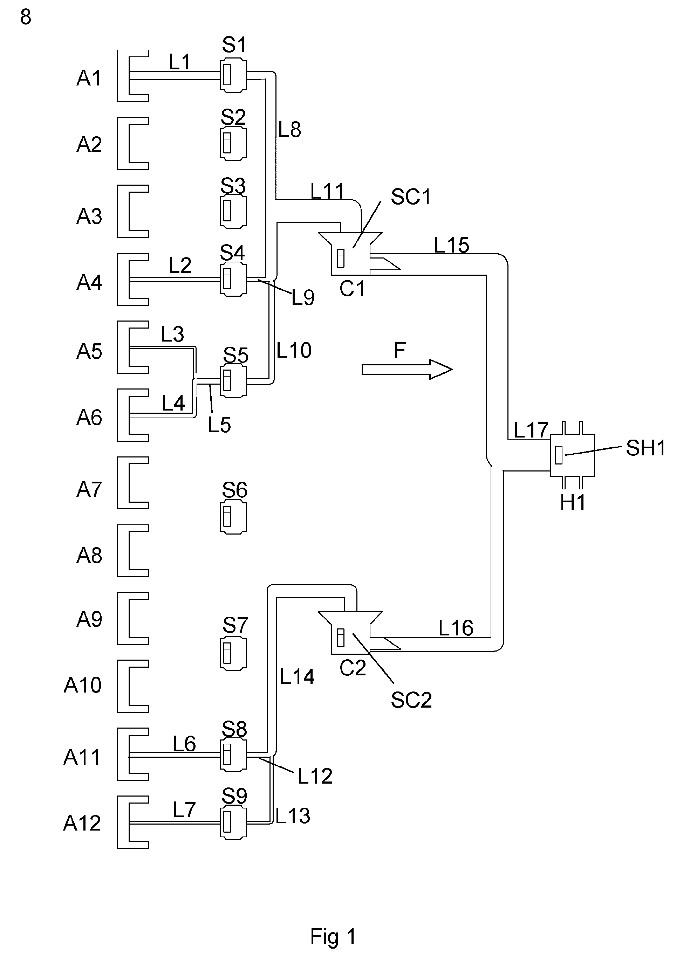

FIGURE 1 and shows another example of a visualisation of production equipment and a material flow between the process stages according to an embodiment of the invention;

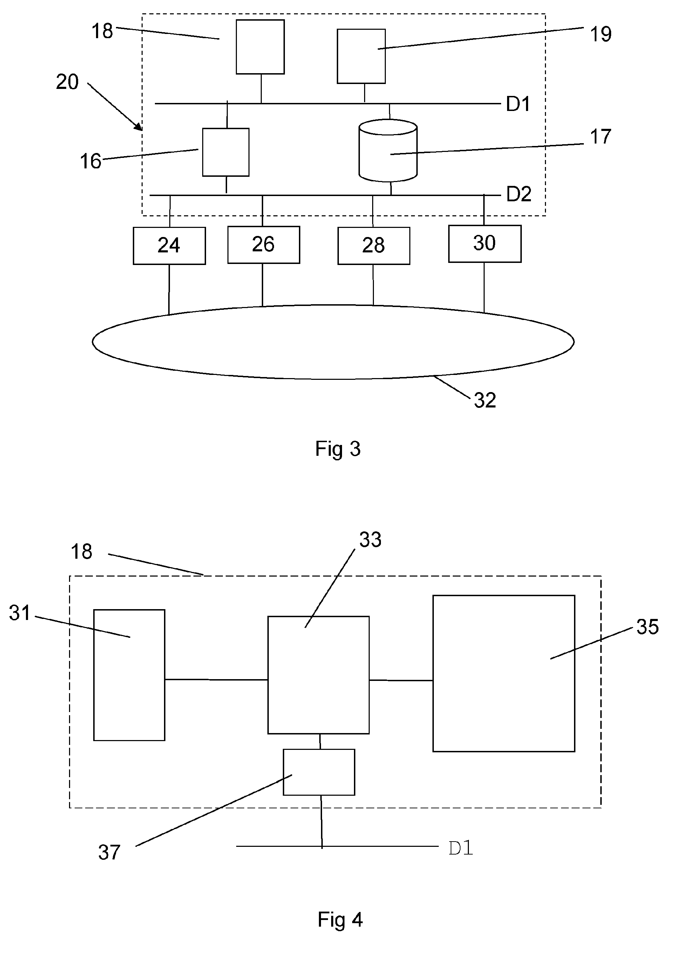

FIGURE 3 shows schematically a process control system for controlling a process such as the process of FIGURE 1, and
FIGURE 4 shows a block schematic of an operator workstation in the process control system of FIGURE 1;

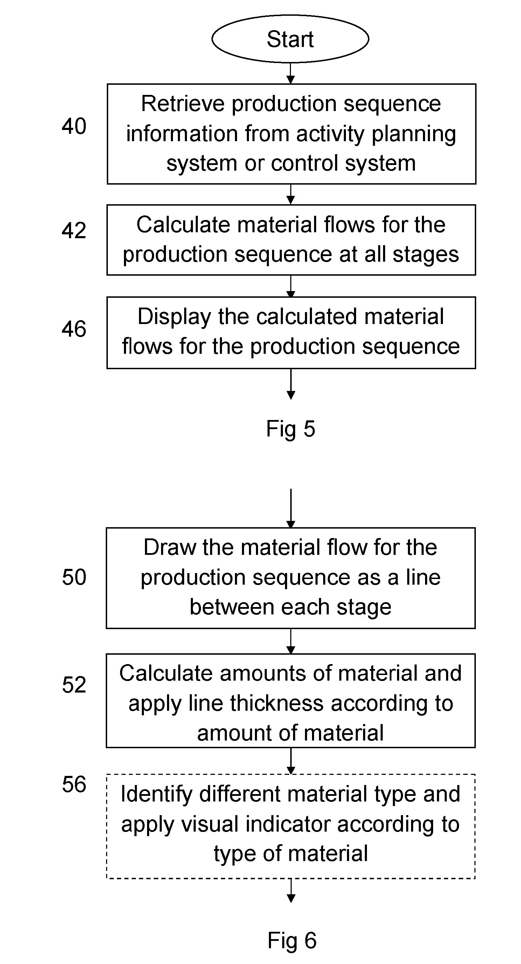

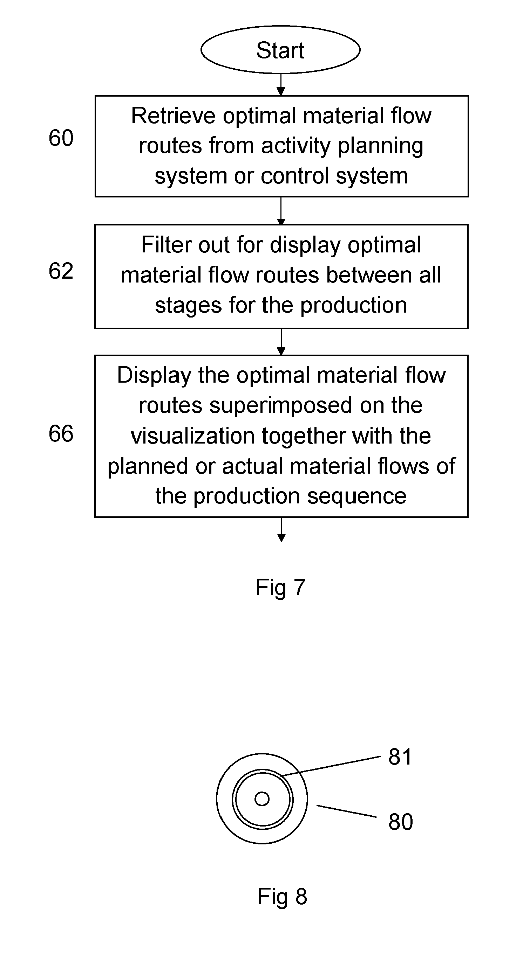

FIGURE 5 shows a flow chart for a computer program for carrying out the method for providing the visualizations for FIGURES 1 & 2, and FIGURE 6 shows another flow chart for carrying out the method according to another embodiment of the invention, FIGURE 7 shows a flowchart for carrying a method of filtering the visualization of FIGURE 1 to display one selected type of material only;
FIGURE 8 shows a data carrier on which a computer program adapted for carrying out the method of FIGURE 1 may be stored;

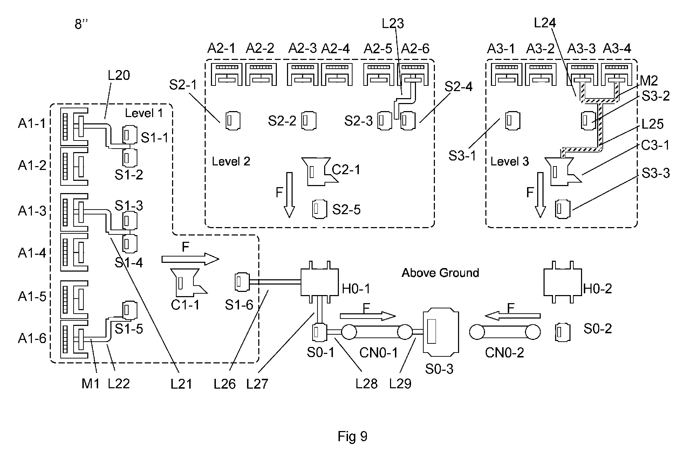

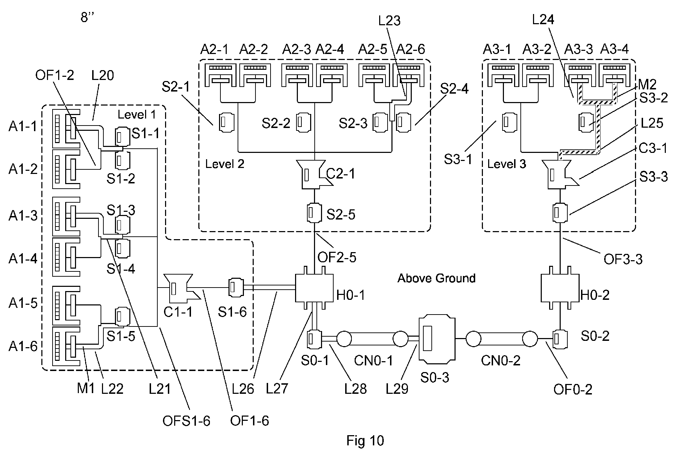

Figure 9 shows a visualisation of another example layout of production equipment and material flows for an embodiment with a plurality of production areas, and Figure 10 shows the visualization of Figure 9 with predetermined optimal material flows optionally superimposed on the visualization of equipment and planned or actual material flows.

### DESCRIPTION OF THE PREFERRED EMBODIMENTS

Figure 1 shows an example of a process for production of a raw or semi-finished material and a visualization 8 of the process. In this exemplary example the figure shows a number of production sites A1-A12 in an underground mine. However the invention is not limited to mines and quarries but may be applied to other processes involving the handling of solid raw or semi-processed materials including for example production processes for cement, lime, fly ash, clinkers; potash, phosphate, salt, grain, sand and clay minerals; ceramic and glass materials, silica sand, cullet; bulk polymer granules.

A1-A12 may be a series of mining faces at which a raw material such as iron ore or copper ore, or coal, clay, lime, etc. is cut, drilled, blasted, dug or otherwise excavated at the mining face or cutting face. The direction taken by the material flow is from left to right in this diagram, as indicated by the right-pointing arrow and letter F. The raw material is then gathered after excavation, typically by a mechanical loader, and loaded into one or more trucks which transport the raw material from the first stage to the next stage. Depending on a particular production sequence, the next stage may be an interim storage shown as S1-S9 which may for example be a hopper, a bunker or an area with a heap or mound of raw material. From the cutting face Al-12 or from a storage S1-S9 the raw material may be transported to a crusher C1 or C2. After crushing at C1 or C2 the material may be transported to a storage or may be transported for example to a hoist such as H1 to move the material to another level in the mine or up to the surface. For another production sequence, the sequence may instead be to transport the raw material from the first stage directly to a later stage, such as the hoist H1.

In the example shown, a material flow from A1 is visualized by a line drawn between A1 and S1. The material may be stored temporarily at a storage such as S1. The amount of material moved by a truck in a single load, which may be registered by a sensor during loading or by a sensor on the truck, is recorded in a process control system. Sensors SC1, SC2 are also arranged at the crushers C1, and C2 to record measures of load or force from which estimates of weight throughput may be derived. One or more sensors may be arranged on the mechanical loader, or other handling equipment, or on the truck to record the weight of a load of raw material loaded into the truck. The material flow between A1 and S1 is visualized in the process control system by drawing a line between the first stage A1 and the next stage in this example which is S1. To simplify the visualization, and reduce visual clutter, the other possible routes for material flow between A2 and A3 and C1, for example, are not shown marked as there is no flow of material. The visualization may be displayed in one single display window on a workstation or other computer device connected to a control system.

The line between any two stages may be displayed as a plain solid black or coloured line on a display. Optionally, and in particular when a more complex flow is visualized, a line representing a particular material flow may be drawn using a dashed or dotted line or a semi-transparent line, for example to show a calculated optimal flow. The thickness of the line may be varied to show the relative amount, for example the quantity of the material measured by weight that flows between the various stages. It should be noted that the drawings in Figures 1-4 and Figures 9-10 are intended to be representative only, and are not drawn to scale. The measures are not limited to weight but may be any measured parameter such as volume, weight, or an estimated measure such as density, volume and/or weight. Thus the material flow from A1 to S1 is a thin or narrow line L1, the material flow from S1 toward the crusher C1 is shown relatively thin L8. Then the combined flow from S1, S4 and S5 to crusher C1 is a thicker, or broader line L11. Likewise the line showing material flow from S9 is a narrow line L13, the material flow increases when combined with raw material from S8, shown by thicker line L14, and it is the final flow into crusher C2. The final flow into hoist H1 is a combination of material coming from both crushers C1 and C2. In the above example the weight of separate flows of material may be measured as a basis to calculate amount of raw material in a material flow.

In this example the sensed measurement of a physical parameter of the material flow has been weight. However, any physical parameter that is tracked by the activity planning system or recorded by the process control system may be selected. Typically weight is used, but any physical property of the material flow between any process stages may be selected for measurement and display, for example any property from the group of: quantity of material, weight, volume, density, size distribution, concentration, resistivity/conductivity. Suitable sensors may be arranged in the trucks, at the storages, adjacent material flow on a conveyor and so on. By means of such material characteristics it is possible to estimate quality or concentration parameters so that, for example, a higher or lower metal concentration in a batch of material in one material flow can be estimated. Such indications of quality or concentration may be used to identify where production effort should be directed, or if the concentration is undesirably low, where production should be re-directed or adjusted in some other way.

The information about the material flows may be taken from an activity planning system or from real time material tracking functions in the process control system. When the information is taken from scheduled activities from the planning system, the display shows the current scheduled flow of material. The activity planning system retrieves all the transportation, processing activities that are planned at a specific time, calculates the amounts of raw or semi-processed material and maps the planned transportation of raw material, such as ore, to the process flow display. It is also possible to use a time slider to go back or forward to display historical or future planned flow. That is, the display window of the graphic user interface application is arranged with control functions which make it possible to vary the time period for the display using, for example using a graphic interface control such as a time slider or time line control. The visualization of planned activities from the activity planning system is preferably arranged such that the workstation display may be simply switched from showing the planned activity view, to a visualization that includes real time tracking by a selecting a tab, selecting another view or by another control action. Thus a first display window and a second or other display window may be arranged, each showing a visualization of a different state of the production flow, where the operator or process engineer can switch between the separate displays by eg clicking on a tab, toggling a key combination, or selecting via a computer mouse command or other input method.

When the information is taken from the material tracking functions in the process control system the visualization will instead display the actual flow of material during a defined time interval. That means that it displays the recorded transportation or processing during a time interval regardless of calculated amounts etc in any planned schedule. Measurements of weight, for example, such as from sensors at the A1, A2 cutting face or on board transport trucks and so on, or sensors arranged at the interim storage points S1, S2; or sensors SH1 arranged in or adjacent the hoist H1 track the amount of material at those points or stages. A sensor registering a parameter other than weight of material anywhere between stage A to H or may be used as well as or instead of a sensor for weight. Preferably, the planned activity view previously described may also be switchable so that it may be superimposed as a semi-transparent layer over the actual flow of material, for comparison and control purposes during an actual production sequence.

The benefits of this visualization include that an operator may be trained and learn how to work as an operator with this underground mine example more quickly, with help of the visualization of the process thus provided. The material flow, between the first stage A1 and a second stage S1 or C1 and/or third stage H1 is calculated and displayed on the visualization on a workstation. The actual route taken by the material is shown. Other possible routes in the mine are not normally marked on the visualization, that is, of course, not until such time as those routes are in use for a planned (scheduled) activity or for a real time production activity. Other possible routes are also described below in relation to Figs 9 and 10.

Figure 3 schematically shows a control system 20 for a process 32, i.e. a process control system. The process 32 may be process in a mine or a quarry and may furthermore be any of a number of different types of processes handling a raw material or a semi-processed raw material such as a first metal ore, a second metal ore, high grade ore, low grade ore, non-metallic minerals, stone, sand, limestone, lime, cement, slag, mining waste and so on. The visualization may optionally be used to visualize a material such as mining waste or other low value material that may be removed from a cutting face or a crusher, stored and at some stage transported for burial or backfill at a disused cutting face or other suitable place.

The control system 20 may for instance be an object-based computerised system for controlling the process 32, a system such as the 800xA system supplied by ABB. An activity planning system may be implemented as an add-on module or application that can access the history database 17 of the process control system. Preferably such an activity planning system can also access sensor data or other data direct from the control system or via process interface units (24-30). In Fig. 3 the process control system 20 includes a number of operator workstations or terminals 18 and 19 connected to a first data bus D1. There is furthermore a second data bus D2 between the first and second busses that is connected to a server 16 providing control and monitoring of the process 32 and a database 17 where data, such as historical data relating to control and monitoring of the process 32 is stored. To the second data bus D2 there are furthermore connected process interface units 24, 26, 28 and 30 for providing control of the process and for receiving measurement data from the process 32. In the figure there are provided four such process interface units 24, 26, 28, 30 that interface the process 32.

It should however be realized that there may be more or fewer of each of these interface units. It should here also be realized that some of these may only be provided for control, some only for measurements and some for both control and measurements. It should be realized that one or more of sensor units placed at storages S1-9, sensors SC1, SC2 arranged at the crushers C1, C2 and one or more sensors SH1 arranged at the hoist H1 may be connected to such process interface units. Such units are thus all involved in controlling the process 32 and in doing this also involved in measuring physical properties related to the process. The measured properties may here be properties of the process itself such as a weight of a load of metal-bearing ore, or a weight of another raw material in a storage such as S1 or S2. The measured properties may be other data relevant for monitoring and control of the process of operating parameters such as motor temperature, motor speed, motor voltage and/or current from process equipment such as a conveyor belt, a hoist, and parameters such as payload weight or geographical position from a vehicle, which is typically transmitted wirelessly from a truck to a control system wireless receiver or a wireless access point (not shown in figures). The process interface units 24, 26, 28, 30 may also provide information on properties or status of vehicles in the process.

It is advantageous that the visualisation provides an interface in the process control system which functions in a very simple and intuitive way. This enables an operator to evaluate the information in more quickly and in a less fatiguing way. First the material flow is visualized as a line connecting two or more stages. Physical material parameters such as weight or volume or density etc may be shown by the relative thickness of the lines. Secondly, simply by selecting and activating an equipment icon a link to information held by the process control system is activated. Thus by means of the process control system and, for example interface units 24, 26, 28, 30 selecting or activating a control object on the visualization such as one of the a cutting faces A1-A12 or a Storage S1-S9, a crusher C1 or C2 or the hoist H1, measured physical parameters and stored historical data may be accessed, retrieved and displayed to the operator or process engineer. The control object may be visualized as a truck icon, cutting face icon, an icon for a storage hopper and so on. This information about the process, such as production sequence records, a motor speed of a crusher, a motor speed of a loading vehicle, motor speed of a truck and so on is used by the operator for monitoring and control purposes or a process engineer for engineering, calibration, configuration and so on.

Figure 4 shows an operator workstation 18 in a process control system 20 that includes a user input unit 31, a display unit 35, a display control unit 33 and an interface 37 for communicating with the other parts of the process control system 20 via the first data bus D1. An operator workstation 18 or 19 provides a graphical user interface for an operator of the system, with which process graphics, such as the present visualization, and other human machine interface screens for monitoring or controlling a process may be displayed. The control unit 33 may comprise a processor with an associated program memory including program code for performing the functionality of the present invention. The display unit 35 may be any suitable display unit, such as a liquid crystal display, plasma display, LED or OLED (organic light emitting diode) or CRT device. The user input unit 31 is a unit through which a user of the operator workstation 18, i.e. an operator, may enter data. As such it may be a keyboard, a keypad or a mouse or other data input device. The user input unit 31 may also be combined with the display unit in order to together form a touch screen. The touch screen may be arranged as a multi-touch apparatus with a resistive or capacitive-type touch and display surface.

The methods of the invention may also be carried out using a server application on the process control system side, such as a web server, together with a thin client such as a web browser software running on the workstation side. One such implementation is described in a patent US8,126,964 entitled Method for Displaying Data in an Industrial Control System, and assigned to ABB Research Ltd. A thin client is a program run by the computer of the workstation, which is not required to be resource intensive since most computing is done on another, normally remote computer, the server. This may be a server machine such as data server 16 in Figure 3. Using a client-server implementation has advantages in particular when it comes to provide the visualization in a graphical user interface on a remote workstation or portable computer, notebook, PDA, smart phone or other portable computing device. The methods may also be implemented in a similar way using applications of the process control system running in a cloud and providing computing power to thin client or web browser applications running on a fixed or portable workstation.

The operator workstation or terminal 18 may also include other user interfaces such as a camera for recognizing gesture commands, a speaker or a microphone for registering spoken commands in order to present and receive data to and from one or more users of the operator terminal in other ways than through the display unit. The unit may for example be arranged with sensors and software suitable for receiving gesture-based commands, as well or instead of commands by means of touching or sweeping fingers on a touch screen or instructions input via a computer mouse and so on.

Data from the various process interfaces such as 24, 26, 28, 30 can be collected and stored in a history data base 17 as well as presented in real-time to an operator via the display unit 35. The operator workstation 18 in the process control system 20 may present data regarding the process in a number of different ways. Primarily process information is presented in a series of process graphics, as described previously. It may present the process through a number of interconnected process control units, which process control units may include process interface units. However they may also include other units where the process is carried out but no measurements are being made or no control is carried out. Along with these units the operator terminal may furthermore display data relating to the process as well as to the process control units, such data may be measurement data of a physical property of the process and/or of process interface units. The data may also include data of a physical property that has been derived from a measured physical property. The data may furthermore include status data of various units in the system. The measurements are here typically measurements obtained at discrete and equidistant consecutive points in time, i.e. as data samples of the process in a real time production process.

Figures 5, 6 and 7 show flow charts of a method for carrying out the method of the invention. Figure 5 shows a flowchart for a computer program that is adapted for carrying out method steps including:
40 Retrieve production sequence information from activity planning system or process control system;
42 Calculate material flows for the production sequence, at all stages;
46 Display the calculated material flows for the production sequence

Thus the material flows currently scheduled (from the activity planning system) or in an actual production sequence (real time or data from historical production records) are calculated between all of the stages (A, B, C). The material flows are then displayed as a line connecting two or more stages, for example a flow of material M1 as A1-S1, S1-C1, C1-H1 (Fig 1) in the visualization 8 on the workstation 18.

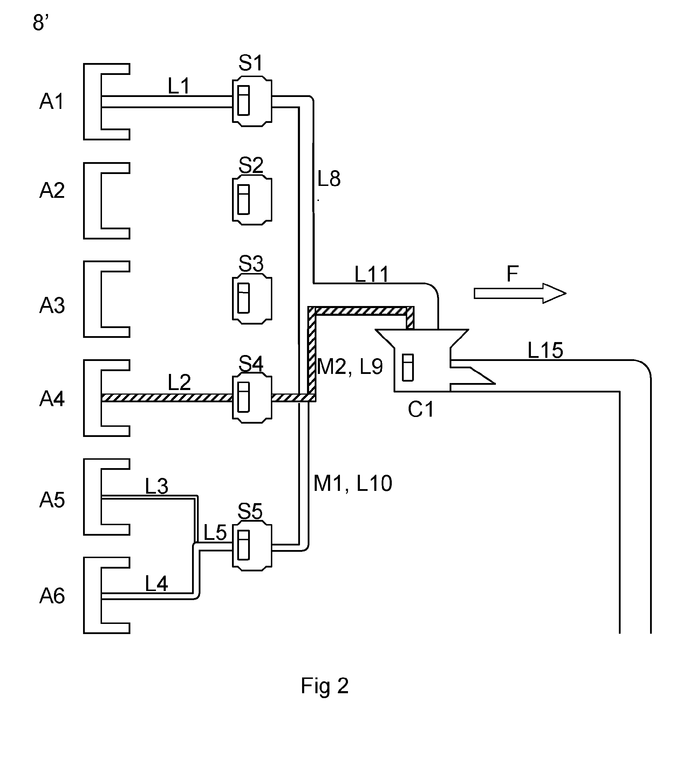

Figure 2 shows a preferred embodiment. It shows a visualization 8' of similar production sequence as in Figure 1. One material flow from cutting face A4 via storage S4 to crusher C1 has been identified, by means of data from either the activity planning system or the process control system, to be a material M2, which is a different material from the material flows M1. This difference may be a difference of type of material, an ore of a different metal, for example. This will occur when, for example a zinc ore and a copper ore are separately mined in the same mine or installation. As well or instead the difference may be that M2 has been partly processed, for example crushed or graded in size, and has a different size distribution from the other material M1. The line representing the flow of material M2 between any two stages, A4-S4, S4-C1 is shown with a predetermined visual indicator. In this case the visualization shows in a very efficient way to the operator which materials are being transported, and in which relative or absolute amounts, and through which stages in the process out of all of the possible routes available in the process.

Figure 6 is a flow chart for a computer program that is adapted for carrying out method steps including:
50 Draw the material flow for the planned or actual production sequence as a line between each stage
52 Calculate an amount of material at each stage and apply line thickness dependent on the amount
56 Optionally, identify different type or types of material and apply a visual indicator according to type of material

Step 52 may optionally be performed before step 50 so that the thickness is calculated first and then the line is drawn with the thickness thus calculated. Thus at step 56 different material or different ore type material flows in the process A4-S4, S4-C1 may be shown by applying a filter to the planned production sequence or actual production sequence. Thus in an actual production sequence, real-time measurement data of one or more physical properties relating to a process, or stored historical such measurement data, may be filtered to obtain only the measurement data for a predetermined type of material. Examples of different types of raw or semi-processed material the material flow contains may include any from the group of: mineral, metal ore, high grade ore, low grade ore, stone, sand limestone, mining waste, slag. Different types of material may also include ores containing different metals, a first metal ore and a second metal ore so as to say, such the zinc ore and copper ore example in the same mine. The material flow of one or more of the different material types may be displayed on the visualization 8' with a visual indicator such as M2.

The direction or route taken by the material flow between any two or more stages is displayed as a line such as A4-S4 or S4-C1 between the two stages. An automatic calculation, based on planned quantities (from activity planning system) or actual measurements (from current or historical production in process control system), is made to calculate the amount of material in a material flow, such as the weight. When more than one type of material is present a visual indicator may be applied. Thus material flow of material M2 is given a visual indicator to differentiate it from material M1. As previously described for a material flow, the thickness of the line may be calculated and displayed proportional to an amount of material flow as well as arranging the line with a visual indicator for M2. The line connecting two objects, which may have a visual indicator to shown which type of material (M1, M2) it is, displayed on the process display visualization 8, 8" provides a clear and un-cluttered overview of, for example, a truck or loader vehicle which either is actually transporting or, is scheduled to transport, raw material such as ore from first production stage to a second or subsequent production stage.

Figure 9 shows a visualisation 8" according to a preferred embodiment. The figure shows an installation with production areas arranged in multiple levels. Levels 1-3 are each marked as an area surrounded by a dotted line. In Level 1 the figure shows six cutting faces or production faces A1-1, A1-2 and so on to A1-6, which may be written as Anl-6. The figure shows that Level 1 has five storage areas or stages S1-1 to S1-5 between the cutting faces Anl-6 and a crusher C1-1. After the crusher there is a sixth storage S1-6 between the crusher and the nearest hoist H0-1. In level 1 three planned or actual material flows are shown visualized, L20, L21 and L23. There is a fourth material flow L26 leaving the Level 1 area between storage S1-6 and the nearest hoist H0-1. The nearest hoist H0-1 for output from Level 1 has to be shared with output etc from Level 2. The direction taken by the material flow in Level 1 is from left to right, as indicated by the right-pointing arrow and letter F. The material in the material flow is indicated to be a first material type, M1.

Level 2 and level 3 are similarly visualized. Level 2 also has six production faces, A2-1 to A2-6. There are four storages S2-1 to S2-4 near to the production faces, and one storage S2-5 between a crusher C2-1 and the nearest hoist H01, located outside Level 2. Only one planned or actual material flow, L23, is visualized in Level 2. The material type is M1. Similarly Level 3 shows four production faces A3-1 to A3-4 with two storages S3-1, S3-2 which are close to the production faces. One material flow is visualized as L24 for A3-3 and A3-4. A third stage S3-3 is positioned between a crusher C3-1 and the nearest hoist which, in this case, is H0-2 connected to the Above ground level. The nearest hoist H0-2 for output from Level 3 has to be shared with output etc from Level 2, however output from Level 2 may equally well be shared with output from Level 1 on hoist H0-1. The direction taken by the material flow in Levels 2, 3 is from upper to lower in the diagram, as indicated by the down-pointing arrow and letter F. The material type in the material flow 25 is indicated by the visual indicator to be a different material type M2 to the material M1 in the processes of Level 1, 2 and the Above ground level.

The fourth level is called 'Above ground'. This level may be above ground and the other three levels at different depths below ground. In principle all of the levels could as well represent different levels above or below ground in an installation. The figure shows that the Above ground level includes the two hoists H0-1, and H0-2 previously described, as well as two conveyors CNO-1, CNO-2. There is also a major storage area S0-3 above ground. A minor storage S0-1 is positioned between hoist H0-1 and the major storage S0-3. A conveyor CN0-1 is positioned to move material between storage S0-1 after the hoist H0-1 and the major storage S0-3. Two planned or actual material flows, L26, L28 are visualized in the Above ground production area of Fig 9. Material flow direction left to right or right to left is indicated by each arrow marked with F.

Material flow in the Above ground level begins with a material flow L26 from the storage S1-6 in Level 1 nearest the hoist H0-1, and continues to the Above ground storage S0-1 after hoist H01 and on to the first conveyor CN0-1. The planned or actual material flow L28, L29 then moves towards the major storage S0-3. Thus planned or actual material flows in an installation are visualized so that each material flow may be monitored and controlled by an operator using the visualization. The mat6erial flow visualized as a line L26 from storage S1-6 to hoist H0-1 is an example of a flow out of a storage which is not the same as a flow into the storage. In practice it will often be the case that the material flow into a storage is not exactly the same as the material flow out of a storage. Often it is a high priority to free up space at a cutting face, and material is moved away from the cutting face to interim storages, or holding areas, for that reason. The interim storages are then emptied as a lesser priority depending on a balance of transport capacity or availability in that area and/or production requirements from time to time.

Figure 10 shows the same visualization as Fig 9, with the sole exception that a set of optimized material flows (OF1-1 ... OF3-3) for material flow between each stage in a production area are visualized as well as the planned or actual material flows of interest. For example Level 1 shows in addition to three planned or actual material flows L21 to L22, an optimized material flow OF1-2 between production face A1-2 and storages S1-1, S1-2 as a thin line. A number of optimized material flows OFS1-6 are indicated for flow between each of the storages S1-1 to S1-5 and storage S1-6. Not all the optimized material flows in Fig 10 have been given reference numbers, in the interests of not cluttering up the drawing and making it difficult to read. Also in Level 1 another optimized flow OF1-6 is shown between the crusher C1-1 and the storage S1-6, which is the storage nearest the exit from Level 1. Similarly, in Level 3, an optimized material flow OF3-3 is shown leading between crusher C3-1 of Level 3, storage S3-3, and the nearest hoist H0-2.

Figure 7 is a flow chart for a computer program that is adapted for carrying out method steps in respect of Figure 10, the steps including:
60 Retrieve optimal material flow routes from activity planning system or control system
62 Filter out and display optimal material flow routes between all stages for the production (OR for selected stages of production)
66 Display the optimal material flow routes superimposed on the visualization together with the calculated planned or actual material flows for the production sequence.

Thus at step 62, the planned or actual material flows currently of interest are identified, and the measurement information data filtered to show just those material flows, eg such as L26, L25 and so on in Figure 9. These material flows are essentially equivalent to the planned or actual material flows shown in Figures 1 & 2. Then in step 66 the optimized material flow routes relevant for the planned or actual material flows of Figure 9 (OF1-1 to OF1-6 and so on) are displayed. Preferably the optimal routes are displayed superimposed on the material flows such that both sets of flows are visible at the same time. In an optional development the superimposed optimal flows may be configured to normally only be visible on demand or request by an operator or a process engineer.

The optimized material flows of Fig 10, such as OF1-2, OF1-6 may be shown on a visualization 8" on receipt of a command by the operator. The optimized routes OF1-2, OF1-6, OFS1-6 etc are calculated and created when the installation is designed and engineered, as also described in the flow chart of Figure 7. The optimized routes are also re-calculated or amended when the layouts or equipment in the mine or other installation are upgraded or otherwise changed. Thus the operator can compare a planned material flow or an actual material flow with the optimal material flows as originally designed to make the most efficient use in respect of eg equipment capacities, storage capacities, transport capacities and distances. Certain storages eg S1-1, S1-2 are nearest to specific cutting faces A1-1, A1-2 and it is then optimal to transport material from A1-1 to S1-1 when an interim or temporary storage is required to optimize production at a particular production face or cutting face. The visualization -shown on demand- showing the optimal material flows provides the separate optimal material flows for comparison with a currently planned, or actual, or historical actual material flow intuitively and clearly. This is of benefit for the purposes of training operators, and for planning production, and for adjusting or improving a material flow in an actual production sequence. It is also of benefit in reducing strain and fatigue for operators as the interpretation of simplified schematics is less fatiguing than reading and interpreting text names and explanations.

This generating or "switching on" of visualization 8 " may be implemented using a menu control item, or by for example selecting a graphic control object such as a tab on the present visualization. Preferably visualization 8" is displayed by opening a second display window on the workstation, preferably as a transparent or semi-transparent window. The second window is used to display the visualisation 8" with either: all optimal material flows; or a selected one or more optimal material flows, eg (OF1-2, OF1-6, OF2-5, OF3-3, OFO-2) between the first process stage and a second or subsequent stage in the installation. The visualisation 8" may be displayed on the workstation 18, 19, such that the second display window is superimposed over the first visualisation 8, 8' or under the first visualization in the first display window such that both the visualization of planned or actual material flows (L20-L22, L23, L24) and optimal material flows (eg OF1-3, OFn-6, OF0-2 ) are visible at the same time.

Thus a visualisation of optimal material flow routes, in which the material flows may be generated as a series of eg thin lines in a neutral colour or suitable contrast colour when compared with the material flow lines M1, M2 of Figs 1, 2, and L20-L24 etc of Figs 9, 10. Optionally, the optimal material flows may be displayed as eg dotted lines, or lines with a blinking or an animated effect and so on, in contrast to the substantially thick lines of the typical planned or actual material flows such as those indicated as M1 or M2, L8-L14, L20-L24. The combined view shown in Fig 10 of both material flows and optimal flows may be a default option. If required, a view showing all optimal material flows and only one planned or actual material flow; or even no material flows; may also be generated as a visualization on request. A common situation may be that temporary circumstances make the use of non-optimal storages necessary during a production sequence, something that an operator should be aware of. Another situation is that an equipment problem or capacity problem may have arisen that requires a repair or a equipment upgrade, and the operator or process engineer may then be informed about that by means of being always able to compare a current planed or actual material flow to the optimal flow. For each such situation the visualization makes the tasks of the operator less fatiguing. It is simpler to understand the visual, graphic images than to reading the traditional text names of objects together with explanatory lines of text commonly used in traditional control systems.

Typically the workstation may be arranged as a computer or terminal at a fixed point at a station in the process or in a control room. Alternatively, or as well, one or more workstations may be arranged as portable computing devices communicating with the process control system, such as with data bus D1 for example, over a wireless radio link or WLAN (not shown in the figures). In a preferred embodiment the visualizations 8, 8', 8" and the graphic interface control functions of the visualizations may be optimized for display and use on small portable wireless devices such as PDAs, mobile phones, smart phones and the like. For example, the control functions for the visualization may be optimized for use on a small touch screen as a series of commands entered by touching, pinching or sweeping with fingers and/or with data input or selection and/or command inputs using a pointer or stylus.

Optionally a more complex situation may be visualized. When it is required for training purposes, planning purposes, or for control purposes to visualize the process where a plurality of material types may be involved then different material flows may be calculated and then a plurality of material flows displayed at the same time in the same visualization using a different visual indicator for each different material. Finally, as described in connection with Figures 9 and 10, lines may also be displayed to show one or more optimal material flow routes for comparison with currently planned, actual, or historical actual material flows.

The methods of the invention may, as described herein, be carried out by means of one or more computer programs comprising computer program code or software portions running on a computer or a processor. The microprocessor (or processors) comprises a central processing unit CPU performing the steps of the method according to one or more methods of the invention. The invention is performed with the aid of one or more said computer programs, adapted for carrying out the method of the invention such as the methods flowcharted in Figures 5-7, which are stored at least in part in memory and as such accessible by the one or more processors. The or each processor may be in a memory storage unit of a process system control unit or a PLC (Programmable Logic Controller) or other system part thereof, in a local or distributed computerised control system. It is to be understood that said computer programs may also be run on one or more general purpose industrial microprocessors or computers instead of one or more specially adapted computers or processors.

The computer program comprises computer program code elements or software code portions that make the computer perform the method using equations, algorithms, data, stored values and calculations described previously. A part of the program may be stored in a processor as above, but also in a ROM, RAM, PROM, EPROM or EEPROM chip or similar memory means. The program in part or in whole may also be stored on, or in, other suitable computer readable medium such as a magnetic disk, or a non-transitory computer readable medium such as a CD (compact disc) or a DVD (digital versatile disc), stored on a hard disk, magneto-optical memory storage means, in volatile memory, in flash memory, as firmware, stored on a data server or on one or more arrays of data servers. One such data carrier 80 in the form of a CD ROM disk with a computer program 81 carrying such computer program code is schematically shown in Fig. 8.

The person skilled in the art realizes that the present invention by no means is limited to the examples described above. On the contrary, many modifications and variations are possible within the scope of the appended claims.

## Claims

1. A method for visualizing process flow in a production process (32) in which a raw or semi-processed material is handled, the method including at least one of scheduling a planned production sequence using an activity planning system, or recording a material flow in an existing production sequence in a processing installation using a process control system (20), wherein the material flow is moved from a first stage (A1-A12, An-1-An-6; S1-S9; C1-C2) to a second or subsequent stage (S1-S9, Sn1-6; C1-C2, Cn1-3; H1; H0-1, H0-2; S0-1, S0-2; S0-3) using one or more of a plurality of routes, **characterised by** retrieving information about a production sequence in the installation from the activity planning system or the process control system, calculating one or more said material flows as a result of the planned or actual production sequence and displaying in a first display window on a display (35) of a workstation (18, 19) a schematic visualization (8, 8', 8'') of the flow of material (L1-L7, L20-L24; L8-L14, L25; L26; L27) in a given time period from at least one first process stage to at least one second or subsequent process stage in the installation as a result of the planned or actual production sequence.

2. A method according to claim 1, **characterised by** displaying a route taken by the material flow between the first process stage and the at least one second process stage which route is visually indicated (L1-L7, L20-L24; L8-L14, L25; L26; L27) in a visualization (8, 8', 8") included in a process graphic or process flow diagram.

3. A method according to claim 2, **characterised by** displaying the route taken by the material flow visually indicated by means of a line (L1-L7, L20-L22, L23, L24; L8-L14;L26) joining the first stage to the at least one second process stage (S1-S9, Sn1-1 - Sn1-6; C1, C2, C1-1-C3-1; S01-SO-3).

4. A method according to claim 3, **characterised by** displaying the line visually indicating the material flow where the line has a predetermined thickness and the thickness of the line is calculated (42, 52) and displayed (46) in proportion to a material parameter of the material flow between any process stages equal to any property from the group of: quantity of material, weight, volume, density, size distribution.

5. A method according to claim 4, **characterised by** displaying (56) the line visually indicating the material flow (M1, M2) with a predetermined visual indication according to which type of raw or semi-processed material the material flow contains, the type of material being any from the group of: mineral, a first metal ore, a second metal ore, high grade ore, low grade ore, stone, sand, cement, lime, shale, clinkers, mining waste, slag.

6. A method according to claim 4, **characterised by** applying a filter to the information of the planned production sequence or to measurement data of one or more physical properties of the actual production sequence material flows and displaying (56) at least one material flow for which the line is drawn with a visual indicator (M1, M2) indentifying the material flow of a selected type of raw or semi-processed material.

7. A method according to claim 1, **characterised by** opening a second display window on the workstation as a transparent or semi-transparent window and displaying (66) one or more optimal material flows (OF1-2, OF1-6, OF2-5, OF3-3, OFO-2) between the first process stage and the second or subsequent stage in the installation as a visualisation (8, 8', 8") on the workstation (18, 19), wherein the second display window is superimposed over, or under, the first window such that both the visualization of the planned or actual material flows (L1-L7, L20-L22, L23, L24, L26-L29) and the optimal material flows (OF1-2, OF1-6, OF2-5, OF3-3, OFO-2) are visible at the same time.

8. A method according to claim 1, **characterised by** displaying the schematic visualization (8, 8', 8") of a plurality of the one or more material flows calculated for the planned production sequence or recorded for the actual production sequence, over a time period, wherein the time period may be varied according to user input, and displaying the route taken by the material in the material flow during the user selected time period.

9. A computer program product on encoded on a non-transitory computer readable medium comprising computer program code which, when said program code is loaded into a workstation provided in a process control system, is adapted for carrying out the steps of a method according to any one of claims 1-8.

10. A workstation (18, 19) of a process control system (20) for a production process (32) in an installation in which a raw or semi-processed material is handled, the process control system (20) including at least one computer with computer programs adapted for carrying out at least one of scheduling a planned production sequence using an activity planning system, or for recording material flow in an existing production sequence using the process control system, wherein the material flow is moved from a first stage (A1-A12, An-1-An-6; S1-S9; C1-C2, Cn-1-3) to a second or subsequent stage (S1-S9, Sn1-6; C1-C2, Cn1-3; H1; H0-1, H0-2; S0-1, S0-2; S0-3) using one or more of a plurality of routes, **characterised in that** the workstation comprises an interface (37) for receiving measurement data of one or more physical properties relating to a process (32) being controlled by the process control system (20), a display unit (35) for displaying physical properties of the process control system to a system operator, and a display control unit (33) configured to: retrieve information about a production sequence in the installation from the activity planning system or the process control system (20), calculate one or more said material flows as a result of the planned or actual production sequence and display in a first display window on a display of the workstation a schematic visualization (8, 8', 8") of the flow of material (L1-L7, L20-L24; L8-L14, L25; L26; L27) in a given time period from a first process stage to at least one second or subsequent process stage in the installation as a result of the planned or actual production sequence.

11. A workstation according to claim 10, **characterised in that** the workstation is configured to display a route taken by the material flow (L1-L7, L20-L24; L8-L14, L25; L26; L27) between the first process stage and the at least one second process stage indicated visually in a visualization (8, 8', 8") included in a process graphic or process flow diagram.

12. A workstation according to claim 10, **characterised in that** the workstation is configured to display (46) the route taken by the material flow indicated visually by means of a line (L1-L7, L20-L24; L8-L14, L25, L26; L15-L17, L27-L29) joining the first stage to the at least one second process stage.

13. A workstation according to claim 10, **characterised in that** the workstation is configured to display (46, 56) the material flow visually indicated as a line where the line has a predetermined thickness and the thickness of the line is displayed proportional to a material parameter of the material flow between any process stages equal to any property from the group of: quantity of material, weight, volume, density, size distribution.

14. A workstation according to claim 10, **characterised in that** the workstation is configured to display (56) at least one material flow with a predetermined visual indicator (M1, M2) according to which type of material the material flow contains the type being any from the group of: mineral, a first metal ore, a second metal ore, high grade ore, low grade ore, stone, sand, cement, lime, shale, clinkers, mining waste, slag.

15. A workstation according to claim 10, **characterised in that** the workstation is configured to apply a filter to the information of the planned production sequence or to measurement data of one or more physical properties of the actual production sequence material flows and display (56) at least one material flow for which the line has a visual indicator (M1, M2) indentifying the material flow of a selected type of raw or semi-processed material the material flow.

16. A workstation according to claim 10, **characterised in that** the workstation is configured to open a second display window on the workstation as a transparent or semi-transparent window and display (66) one or more optimal material flows (OF1-2, OF1-6, OF2-5, OF3-3, OFO-2) between the first process stage and the second or subsequent stage in the installation as a visualisation (8, 8', 8") on the workstation (18, 19), wherein the second display window is superimposed over, or under, the first window such that both the visualization of the planned or actual material flows (L20-L29) and the optimal material flows (OF1-2, OF1-6, OF2-5, OF3-3, OFO-2) are visible at the same time.

17. A workstation according to claim 10, **characterised in that** the workstation is configured to display the schematic visualization of a plurality of the one or more material flows calculated for the planned production sequence or recorded for the actual production sequence over a time period, wherein the time period is may be varied according to user input, and to display the route taken by the material in the material flow during the user selected time period.

18. A workstation according to claim 10, **characterised in that** the workstation is configured to display the material flow visually indicated as a line where the line has a predetermined thickness and the thickness of the line is displayed proportional to the amount of material planned or measured as a weight or a volume in the material flow between any process stages.
